# EUROPEAN PATENT APPLICATION

(11) **EP 2 360 409 A1**
(43) Date of publication of application: **24.08.2011**
(21) Application number: 10305135.5
(22) Date of filing: 10.02.2010
(51) Int. Cl.: F16L 25/00

(54) **Device for plugging a hollow pipe to a counter piece, connection system, and method thereof**

(71) Applicant: Alcatel Lucent, 75008 Paris (FR)
(72) Inventor: Poenopp, Reinhard, 31199, Diekholzen (DE); Mientkewitz, Olaf, 30952, Ronnenberg (DE)
(74) Representative: Wetzel, Emmanuelle

(57) **Abstract**

The invention relates to a device (DEV1) for plugging a hollow pipe (HP) to a counter piece, wherein the device (DEV1) comprises a hollow cylinder (HCl) and means (MP) for plugging the hollow pipe (HP) with the device (DEV1) to the counter piece, wherein the hollow cylinder (HCl) comprises means for enclosing an end section of the hollow pipe (HP) and means (SS_lS_HCl) for catching the end section of the hollow pipe (HP), and wherein the device (DEV1) further comprises means (EFl_HCl) for clamping an overhanging border area (BA_HP) of the end section of the hollow pipe (HP) according to the hollow cylinder (HCl) between a first end-face (EFl_HCl) of the hollow cylinder (HCl) and an end-foce of the counter piece by means of the means (MP) for plugging. The invention further relates to a connection system comprising the device and to a method for plugging a hollow pipe (HP) to a counter piece.

## Description

### FIELD OF THE INVENTION

The invention relates to a device for plugging a hollow pipe to a counter piece according to the preamble of claim 1, to a connection system comprising the device, and to a method for plugging a hollow pipe to a counter piece according to the preamble of claim 12.

### BACKGROUND

Corrugated hollow pipes or corrugated hollow tubes with a corrugation in the form of a wavylike changing inner and outer diameter will be used more often for installation purposes, because the corrugated hollow pipes or tubes are made flexible by the corrugation and such flexibility allows to use the corrugated hollow pipes or tubes in many application areas such as heating, machine technology, or line engineering.

During an installation process, a corrugated hollow pipe needs to be connected to a further corrugated hollow pipe, to a vessel or to a device such as a solar panel.

An existing assembly technique uses a flange and a coupling nut. At first, the corrugated hollow pipe is cut in a wave trough of the corrugation by using a pipe cutter. Next, the coupling nut is slid over an end section of the corrugated hollow pipe. Then, the end section of the corrugated hollow pipe is upset to the flange by using a special too! such as a flange impact tool Finally, the corrugated hollow pipe can be connected to its counter piece preferably by using a seal ing ring between the flange and the counter piece. Thereby, the flange is located between an inner end face of the coupling nut and the sealing ring.

A further existing assembly technique for a brake tube uses a retaining bush for the flange and an expanding ring. At first, the expanding ring is slid on an end section of the brake tube. Next, the flange is generated at the end section of the brake tube by a tool. Then, the retaining bush is inserted into a borehole until serrated, sawtooth-like noses at an outer surface of the retaining bush are in contact with an outer rim of the borehole. Next, the end section of the brake tube with the flange is inserted into the retaining bush until the end section is catched by an inner recess of the retaining bush, Then, the retaining bush is inserted deeper into the borehole until the serrated noses are catched by a helical wound opening at an inner surface of the borehole. Finally, the expanding ring is shifted between the brake tube and an inner surface of the retaining bush for wedging the retaining bush against the borehole.

The above mentioned assembly techniques require several assembly steps and in addition a tool for generating the flange at the end face of the tube.

### SUMMARY

The way of assembling hollow pipes or hollow tubes affects duration and effort of on installation method and overall costs of the installation. Therefore, it is an object of the invention to provide an improved installation method, an improved plug connector, and on improved connection system. The object is achieved by a device for plugging a hollow pipe to a counter piece, wherein the device comprises a hollow cylinder and means for plugging the hollow pipe with the device to the counter piece, wherein the hollow cylinder comprises means for enclosing an end section of the hollow pipe and means for catching the end section of the hollow pipe, and wherein the device further comprises means for clamping an overhanging border area of the end section of the hollow pipe according to the hollow cylinder between a first end-face of the hollow cylinder and an end-face of the counter piece by means of the means for plugging. The object is further achieved by a connection system comprising the device, and by a method for plugging the hollow pipe to the counter piece.

The device may be for example a plug connector, the means for plugging may be for example a coupling nut, and the hollow cylinder may be for example a sleeve.

The invention provides a first benefit of saving time for the installation method and thereby reducing the overall installation costs. The invention provides a second benefit of making the installation method easier, because an installer doesn't need to know how to handle the flange impact tool. The invention provides a third benefit of not requiring the flange impact tool for the installation method and thereby the overall installation costs can be further reduced.

In an embodiment of the invention, the device further comprises means for generating a widened flange from the overhanging border area of the end section of the hollow pipe with a first outer diameter larger than a second outer diameter' of the hollow pipe within the hollow cylinder by plugging the device to the counter piece.

This offers an advantage of further improving a stability of a connection system comprising the hollow pipe and the counter piece by using the device. The embodiment provides a further advantage of not requiring the flange impact tool for generating the flange, because the flange is automatically generated by plugging the device to the counter piece. An even further advantage is based on the fact of not requiring an extra process step for generating the flange,

In a further embodiment of the invention, the means for clamping the overhanging border area and/or the means for generating the widened f}onse is the first end-face of the hollow cylinder.

The further embodiment offers a first benefit of not requiring an extra mounting part at the device for the means for clamping or the means for generating the widened flange and/or not requiring two separate mounting parts at the device for the means for clamping and the means for generating the widened flange. The further embodiment offers a second benefit of not requiring an extra fabrication step for providing the means for clamping or the means for generating the widened flange at the hollow cylinder and/or not requiring two extra fabrication steps for the means for clamping and the means for generating the widened flange at the hollow cylinder.

In an even further embodiment of the invention, the means for plugging is separated from the hollow cylinder, and the device comprises means for shifting the hollow cylinder relative to a position of the means for plugging. This provides an advantage of not being required twisting the hollow cylinder and the hollow pipe, it the hollow pipe is plugged to the counter piece. Thereby, damages at the hollow pipe can be avoided.

In a further preferred embodiment of the invention, the means for plugging comprises an opening, the hollow cylinder is located within the opening, an outer surface of the hollow cylinder comprises a first section between a second section and a third section, an inner diameter of the opening is smaller than an outer diameter of the second section and the third section, and a border area of the opening is located between the second section and the third section.

This offers a possibility of not requiring extra components at the device for the means for shifting because such means are provided by a geometrical form of the means fur plugging, by a geometrical form of the hollow cylinder and by putting the hollow cylinder into the opening of the means for pegging. In addition, the assembly of the means for plugging and the hollow cylinder avoids a failing to pieces and thereby avoids further installation steps and makes the installation easier. Furthermore, this allows assembling the means for plugging and the hollow cylinder as the device already during the fabrication process of the device.

In an even further preferred embodiment of the invention, a first distance of the second section of the outer surface of the hollow cylinder to the first end-face of the hollow cylinder is smaller than a second distance of the third section of the outer surface of the hollow cylinder to the first end-face of the hollow cylinder, and the means for plugging overhangs the first end-face of the hollow cylinder, if the border area of the opening is in contact with the second section of the outer surface of the hollow cylinder.

This provides a first benefit of enclosing or encasing an interface between the hollow pipe and the counter piece by the means for plugging, if the hollow pipe is plugged to the counter piece. Thereby, the interface is protected by the means for plugging against external factors such as mechanical impacts. Furthermore, this allows to use for example a screw thread within the opening of the means for plugging, if the means for plugging is a coupling nut.

In a further embodiment of the invention, the hollow cylinder comprises at least one longitudinal opening in a wall of the hollow cylinder and a gap between the inner diameter of the opening and a second outer diameter of the first section of the outer surface of the hollow cylinder is within a predefined range.

This offers a possibility of an automatic widening of the hollow cylinder, when the hollow cylinder is being located within the means for plugging, if the end section of the hollow pipe is inserted into the hollow cylinder. Thereby, an effort for the insertion step can be reduced and the installation process can be easier performed,

In a further preferred embodiment of the invention, an inner surface of the hollow cylinder comprises a first section with a first inner diameter and at least one second section with a second inner diameter smaller than the first inner diameter the means for catching the end section of the hollow pipe is the at least one second section of the inner surface, and a geometrical form of the at least one second section of the inner surface is adapted to fit into at least one wave trough of an annularly corrugated outer surface of the hollow pipe.

The further preferred embodiment of the invention provides an advantage to adapt the geometrical form of the means for catching of the hollow cylinder to one or several wave troughs of the annularly corrugated outer surface of the hollow pipe- This allows installing hollow pipes with an annularly corrugated outer surface in an easy way by using the annularly corrugated outer surface of the hollow pipe as a hook.

In another embodiment of the invention, the connection system comprising the device further comprises the hollow pipe and the counter piece, the hollow pipe is plugged to the counter piece by the device, the first end-face of the hollow cylinder is within a predefined radial distance from a centre of the hollow pipe, and an end-face of the counter piece within the predefined radial distance is parallel oriented to the first end-face of the hollow cylinder. The connection system may be for example a screw connection, the hollow pipe may be for example a metal pipe, and the counter piece may be for example a double nipple.

This provides the benefit of clamping the overhanging border area of the end section of the hollow pipe between two parallel oriented surfaces. Thereby, a contact surface for the clamping can be increased and guidance for the overhanging border area of the And section of the hollow pipe con be provided.

In another preferred embodiment of the invention, the method further comprises the step of cutting the hollow pipe at a wave trough of an annularly corrugated outer surface of the hollow pipe.

This allows to make the clamping and/or the generating of the widened flange of the overhanging border area of the end section of the hollow pipe easier in comparison of cutting the hollow pipe at a wave crest of the annularly corrugated outer surface because this allows to compress at least one complete wave crest of the annularly corrugated outer surface of the hollow pipe and thereby a sealing between the first end face of the hollow cylinder and the end face of the counter piece can be improved.

Further advantageous features of the invention are defined and arc described in the following detailed description of the invention.

### BRIEF DESCRIPTION OF THE FIGURES

The embodiments of the invention will become apparent in the following detailed description and will be illustrated by accompanying figures given by way of non-limting illustrations.
Figure 1 shows schematically a block diagram of a cross sectional view of a device according to an embodiment of the invention.
Figure 2 shows schematically a block diagram of a cross sectional view of a connection system according to a further embodiment of the invention.
Figure 3 shows schematically a block diagram of a method for plugging a hollow pipe to a counter piece according to the embodiments of the invention.
Figure 4 shows schematically a block diagram of a cross sectional view or an extract of a connection system according to an even further embodiment of the invention.
Figure 5 shows schematically a time sequence of the method for plugging the hollow pipe to the counter piece with three block diagrams of cross sectional views of extracts of the connection system of Figure 2.

### DESCRIPTION OF THE EMBODIMENTS

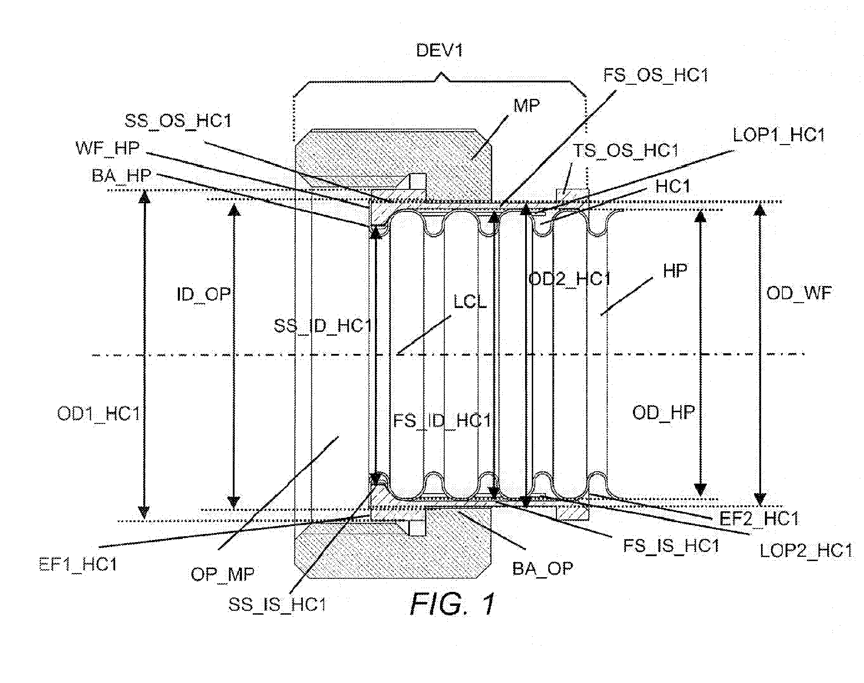

Figure 1 shows schematically in a block diagram and a cross sectional view a device DEV1 and a hollow pipe HP according to an embodiment of the invention.

The hollow pipe HP may comprise for example an annularly corrugated outer surface and an annularly corrugated inner surface as shown in Figure 1. In an alternative, the hollow pipe HP may comprise the annularly corrugated outer surface and a flat inner surface. In a further alternative, the hollow pipe HP may comprise a flat outer surface and the flat inner surface,

The hollow pipe HP may consist of a metal material such as stainless steel or copper, In an alternative, the hollow pipe HP may consist of a plastic materia! such as polyamide, polyethylene, polypropylene, polytetrafluorethylene or PVC (PVC = polyvinyl chloride).

The hollow pipe HP may be used for carrying and piping liquids, gases, or free flowing solid bodies such as sand or sugar.

Preferably, an end face of the hollow pipe HP is cut at a wave trough of the annularly corrugated outer surface. In on alternative the end face of the hollow pipe HP may be cut at a wave crest of the annularly corrugated outer surface to improve a guidance for the generating of the widened flange and to avoid a compression of the overhanging border area in a radial direction to a longitudinal centre line LCL of the hollow pipe HP. The device DEV1 may be for example a plug connector and preferably comprises a hollow cylinder HC1 separated from a means MP for plugging the hollow pipe HP with the device DEV1 to a counter piece such as a double nipple, a vessel, or a further device such as a solar panel,

The device DEV1 may further comprise means for shifting the hollow cylinder HC1 relative to a position of the means MP for plugging. The means for shifting can be realised for example in a following way: The means MP for plugging may comprise an opening OP_MP as shown for example in Figure 1. The hollow cylinder HC1 may be located within the opening OP_MP. An outer surface of the hollow cylinder HC1 may comprise a first section FS₋OS₋HC1 between a second section SS₋OS₋HCI and a third section TS_OS_HCI in a longitudinal direction of the hollow cylinder HC1, An inner diameter ID_OP of the opening OP_MP may be smaller than an outer diameter OLD I HCI of the second section SS₋OS₋HCI and the third section TS₋OS₋HCI of the outer surface of the hollow cylinder HC1. A border area BA_OP of the opening OP_MP may be located between the second section SS_OS_HC and the third section T5_OS_HC1 of the outer surface of the hollow cylinder HC1.

In an alternative, the hollow cylinder HC1 and the means MP for plugging may be fabricated as a single pail by milling a metal block or by injection molding, if the hollow cylinder HC1 and the means MP for plugging are made from a plastic material.

The hollow cylinder HC1 may be for example a sleeve and comprises means for enclosing an end section of the hollow pipe HP and means for catching the end section of the hollow pipe HP.

The means for enclosing is preferably a circular cylinder wall of the hollow cylinder HC1.

An inner surface uf the hollow cylinder HC1 preferably comprises in the longitudinal direction of the hollow cylinder HC1 a first section FS_lS HC1 with a first inner diameter FS_ID_HC 1 and one or several second sections SS_IS_HCI with a second inner diameter SS_ID_HCI smaller than the first inner diameter F5_lD_HC1. The one or several second sections SS_lS_HC1 may be the means for catching the end section of the hollow pipe HP. Preferably, a geometrical form of the one or several second sections SS_lS_HC of the inner surface of the hollow cylinder HC1 may comprise a circular salient and may be adapted to fit into one or several wave troughs of the annularly corrugated outer surface of the hollow pipe HP as shown in Figure 1.

If the hollow pipe comprises for example a flat outer surface, a catching may be performed by using grooves with a predefined distance at the flat outer surface and wherein one or several second sections SS_S_HC1. adapted to a geometrical form of the grooves - may fit into one or several grooves of the flat outer surface. Preferably, the flat outer surface comprises cutting marks with a predefined distance from the grooves for cutting the hollow pipe. The predefined distance between the grooves and the cutting marks may define a size of the overhanging border area.

The means MP for plugging may be preferably a coupling nut with an Internet! screw thread and (1 hexagon head.

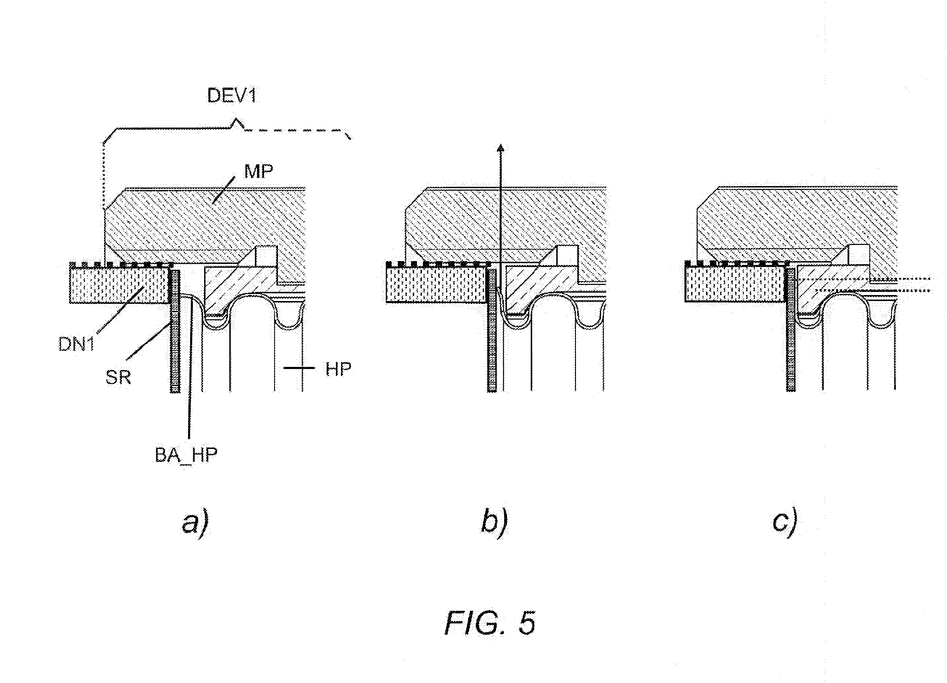

The hollow pipe HP can be inserted into the hollow cylinder HC1 from a second end face EF2_HC1 of the hollow cylinder HC1 in such a way, that a border area BA_HP of an end section of the hollow pipe HP overhangs from a first end face EF1_HC of the hollow cylinder HC1 (see for example Figure 5 a)).

The device DEV1 further comprises means for clamping the overhanging border area BA_HP between the end face EF1 _HC1 of the hollow cylinder HC1 and an end face of the counter piece by using the means MP for plugging. Preferably, the means for clamping the overhanging border area BA_HP is the first end face EH _HC of the hollow cylinder HC1.

Preferably, the device DEV1 may further comprise means for generating a widened flange WF_HP from the overhanging border area BA_HP of the end section of the hollow pipe HP with a first outer diameter OD_WF larger than a second outer diameter OD_HP of a section of the hollow pipe HP, which is located within the hollow cylinder HC1. The widened flange WF_HP may be generated by plugging the device DEV1 to the counter piece. Preferably, the means for generating the widened flange WF_HP is the first end face CF1_HC1 of the hollow cylinder HC1.

A first distance of the second section SS_OS_HCI of the outer surface of the hollow cylinder HCI to the first end face EF1_HC1 of the hollow cylinder HC1 is smaller than a second distance of the third section T5_OS_HCl of the hollow cylinder HC1 to the first end face EF1_HC1 of the hollow cylinder HC1. The means MP for plugging preferably overhangs the first end face EF1_HCl of the hollow cylinder HC1, if the border area BA_OP of the opening OP_MP is in contact with the second section SS_05_HC of the outer surface of the hollow cylinder HC1 as shown in Figure 1.

Preferably, the hollow cylinder HC1 comprises one or several longitudinal openings LOP1_HC1 LOP2_HCl in a wall of the hollow cylinder HC1 In a further preferred embodiment, a gap between the inner diameter lD_OP of the opening Of_MP of the means MP for plugging and a second outer diameter OD2_HCI of the first section FS_OS_HC1 of the hollow cylinder HC1 is within a predefined range. The predefined range may depend on a softness of the material of the hollow cylinder HC1 and/or a stiffness of the material of the hollow pipe HP and is preferably in a range from 0.1 mm to 0.5 mm.

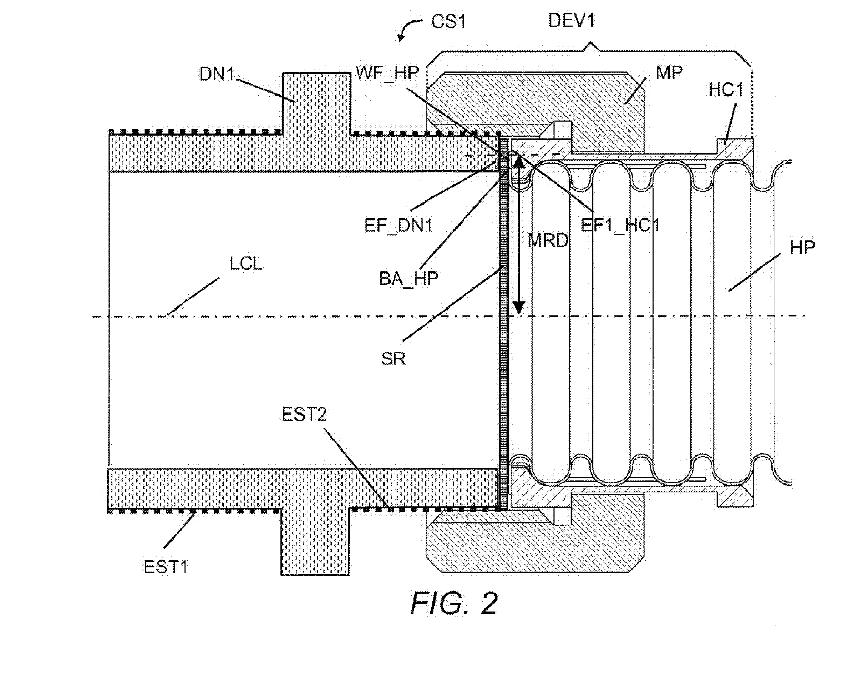

Figure 2 shows schematically in a block diagram and a cross sectional view a connection system CS1 according to a further embodiment of the invention. The elements in figure 2 that correspond to elements of Figure 1 have been designated by same reference numerals.

The connection system CS1 may be for example a screw coupling and comprises the device DEV1, the hollow pipe HP, preferably a sealing ring SR, and a counter piece DN1. The hollow pipe HP is plugged to the counter piece DN1 by the device DEV1.

The counter piece DN1 may be for example a double nipple with two external screw threads EST1, EST2 at both end sections. In further alternatives, the counter piece DN1 may be for example a liquid pump, a blower, or a device such as a solar panel or a vessel.

The first end face EFl_HCl of the hollow cylinder HC1 may be within a predefined middle radial distance MRD from the longitudinal centre line LCL of the hollow pipe HP and the counter piece DN1. An end face EF_DN1 of the counter piece DN1 may be also within the predefined middle radial distance MRD from the longitudinal centre line LCL of the hollow pipe HP and the counter piece DN1. Preferably, the end face EF DN1 of the counter piece DN1 may be parallel oriented to the first end face EF1_HC1 of the hollow cylinder HC1.

A preferred location of the optional sealing ring SR is between the end face EF-DN1 of the counter piece DN1 and the first end face EF1_HC1 of the hollow cylinder HC1.

The overhanging border area BA_HP of the end section of the hollow pipe HP is clamped between the first end face EF1_HC1 of the hollow cylinder HC1 and the end face EF_DN1 of the counter piece DN1 preferably via the sealing ring SR as shown in Figure 2.

Furthermore, the widened flange WF_HP has been generated from the overhanging border area BA_HP of the end section of the hollow pipe HP by the clamping step between the first end face EF1_HC1 of the hollow cylinder HCl and the end face EF_DN1 of the counter piece DN1 preferably via the sealing ring SR as shown in Figure 2.

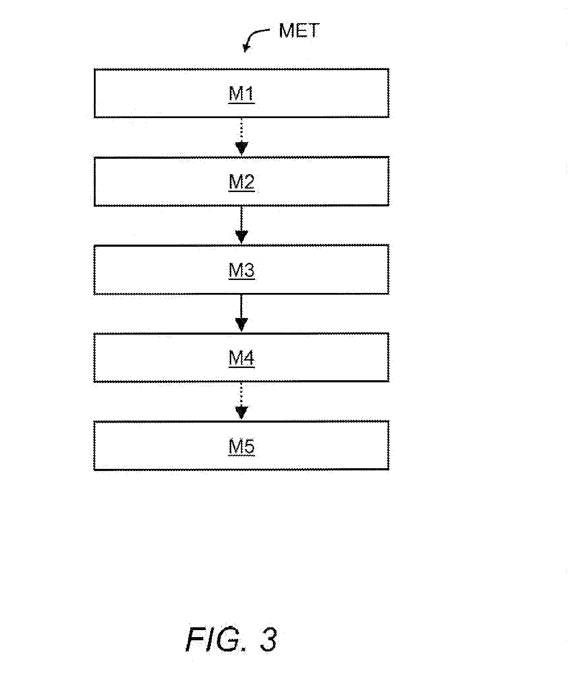

Referring to Figure 3, a block diagram of a method MET for plugging the hollow pipe to the counter piece according to the embodiments of the invention is shown.

The sequence and the number of the steps for performing the method MET is not critical, and as can be understood by those skilled in the art, that the sequence and the number of the steps may vary without departing from the scope of the invention, e.g. some of the steps may be performed simultaneously or some of the steps are ignored as indicated by dotted arrows in Figure 3.

In a first optional, preferred step M1, the hollow pipe HP may be cut at a wave crest of the annularly corrugated outer surface of the hollow pipe HP by using for example a pipe cutter, if the hollow pipe HP comprises the annularly corrugated outer surface.

In a further step M2, the end section of the hollow pipe HP is enclosed by the hollow cylinder HCl of the device DEV1.

In a first alternative, the hollow cylinder HCl is not already mounted to or located within the device DEV1 and the hollow cylinder HCl is slid on the end section of the hollow pipe HP until the overhanging border area BA_HP of the end section of the hollow pipe HP appears and is stuck out of the hollow cylinder HCl. Then the hollow cylinder HCl together with the end section of the hollow pipe HP is mounted to the device DEV1. This may be done for example by compressing the hollow cylinder HCl and the end section of the hollow pipe HP, so that it can be inserted into the opening OP_MP of the means MP for plugging,

In a second alternative, the hollow cylinder HCl is already mounted to or located within the device DEV1. The hollow cylinder HCl may be slid on the end section of the hollow pipe HP until the overhanging border area BA_HP of the end section of the hollow pipe HP appears and is stuck out of the hollow cylinder HCl.

In a next step M3, the end section of the hollow pipe HP is catched by the hollow cylinder HCl of Figure 1, Preferably, the steps M2 and M3 are performed simultaneously and a size of the overhanging border area BA_HP of the end section of the hollow pipe HP is determined by a location of the second section SS_IS_HCl of the inner surface of the hollow cylinder HCl. The step M3 is performed for example by a gliding of the second section SS_IS_HCl of the inner surface of the hollow cylinder HCl into one or several wave troughs of the annularly corrugated outer surface of the hollow pipe HP.

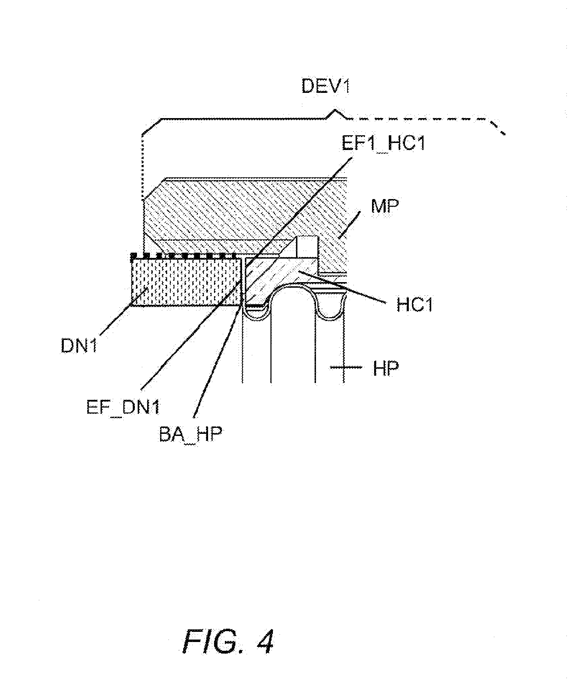

In a further step M4, the border area BA_HP of the end section of the hollow pipe HP overhanging according to the hollow cylinder HCl is clamped between the first end face EFl_HCl of the hollow cylinder HCl and the end face EF_DNl of the counter piece DNl by plugging the device DEV1 to the counter piece DN1. Figure 4 shows for example an extract of the Figure 2 but with an adopted overhanging border area BA_HP of the hollow pipe HP, which is smaller them the overhanging border area BA_HP of the hollow pipe HP of Figure 2 and without using the sealing ring SR. The overhanging border area BA_HP of the hollow pipe HP is clamped between the first end face EFl_HC_l of the hollow cylinder. HCl and the end face EF_DN1 of the counter piece DN1 by changing a geometrical form of the overhanging border area BA_HP of the hollow pipe HP but without using a widened flange.

In a next optional, preferred step M5, the widened flange WF_HP is generated from the overhanging border area BA_HP of the end section of the hollow pipe HP by plugging the device DEV1 to the counter piece DN1. Figure 5 shows schematically a time sequence of the method for plugging the hollow pipe HP to the counter piece DN1 with three block diagrams of cross sectional views of extracts of the connection system of Figure 2. In Figure 5 a) the sealing ring SR and the counter piece DN1 are inserted into the device DEV1, so that the sea ling ring SR touches the overhanging border area BA_HP of the hollow pipe HP. In Figure 5 b) the sealing ring SR and the counter piece DN1 have been deeper inserted into the device DEV1 for example by screwing the means MP for plugging using for example a wrench. By doing this, the geometrical form of the overhanging border area BA_HP is changed by pushing the overhanging border area BA_HP in a radial direction off the centre of the longitudinal centre line LCL of the hollow pipe HP and the counter piece DN1 (indicated by a vertical arrow in Figure 5 b)). In Figure 5 c) the sealing ring SR and the counter piece DN1 have been inserted more deeper into the device DEV1 until a predefined contact pressure is achieved. The predefined contact pressure may not destroy the sealing ring SR or the end faces EF1_HCl, EF_DN1 of the hollow cylinder HCl and the counter piece DN1 Figure 5 c) shows that the overhanging border area BA_HP is clamped between the end faces of the hollow cylinder HCl and counter piece DN1 and that the widened flange WF_HP extends the outer diameter of the annularly corrugated outer surface of the hollow pipe HP located within the hollow cylinder HCl (indicated by two horizontal lines in Figure 5 c)).

## Claims

1. A device (DEV1) for plugging a hollow pipe (HP) to a counter piece (DN1), said device (DEV1) comprising a hollow cylinder (HCl) and means (MP) for plugging said hollow pipe (HP) with said device (DEV1) to said counter piece (DN1), said hollow cylinder (HC1) comprises means for enclosing an end section of said hollow pipe (HP) and means (SS_IS_HCl) for catching said end section of said hollow pipe (HP), **characterized in that** said device (DEV1) further comprising means (EFl_HCl) for clamping an overhanging border area (BA_HP) of said end section of said hollow pipe (HP) according to said hollow cylinder (HCl) between a first end-face (EFl_HCl) of said hollow cylinder and an end-face (EF_DN1) of said counter piece (DN1) by means of said means (MP) for plugging.

2. Device (DEV1) according to claim 1, wherein said device (DEV1) further comprises means (EFl_HCl) for generating a widened flange (WF_HP) from said overhanging border area (BA_HP) of said end section of said hollow pipe (HP) with a first outer diameter (OD_WF) larger than a second outer diameter (OD_HP) of said hollow pipe (HP) within said hollow cylinder (HCl) by plugging said device (DEV1) to said counter piece (DN1).

3. Device (DEV1) according to any of the preceding claims, wherein said means (EFl_HC1) for clamping said overhanging border area (BA_HP) and/or said means (EFl_HCl) for generating said widened flange (WF_HP) is said first end-face of said hollow cylinder (HCl).

4. Device (DEV1) according to any of the preceding claims, wherein said means (MP) For plugging is separated from said hollow cylinder (HCl), and wherein said device (DEV1) comprises for shining said hollow cylinder (HCl) relative to a position of said means (MP) for plugging.

5. Device (DEV1) according to claim 4, wherein said means (MP) for plugging comprises an opening (OP_MP), wherein said hollow cylinder (HCl) is located within said opening (OP_MP), wherein an outer surface of said hollow cylinder (HCl) comprises a first section (FS_OS_HCl) between a second section (55_OS_HCl) and a third section (TS OS HCl) wherein an inner diameter (OD_OP) of said opening (OP_MP) is smaller than an outer diameter (OD1_HCl) of said second section (SS_OS_HCl) and said third section (TS_OS_HCl), and wherein a border area (BA_OP)of said opening (OP_MP) is located between said second section (SS_OS__HCl) and said third section (TS_OS_HCl).

6. Device (DEV1) according to claim 4 or claim 5, wherein a first distance of said second section (SS_OS_HCl) of said outer surface of said hollow cylinder (HC1) to said first end-face (EFl_HCl) of said hollow cylinder (HCl) is smaller than a second distance of said third section (TS_OS_HCl) of said outer surface of said hollow cylinder (HCl) to said first end-face (EFl_HCl) of said hollow cylinder (HCl), and wherein said means (MP) for plugging overhangs said first end-face (EFl_HCl) of said hollow cylinder (HCl), if said border area (BA_OP) of said opening (OP_{_}MP) is in contact with said second section (SS_OS_HCl) of said outer surface of said hollow cylinder (HCl).

7. Device (DEV1) according to claim 5 or claim 6, wherein said hollow cylinder (HCl) comprises at least one longitudinal opening (LOP1_HCl, LOP2_HCl) in a wall of said hollow cylinder (HCl) and wherein a gap between said inner diameter (ID_OP) of said opening (OP_MP) and a second outer diameter (OD2_HCl) of said first section (FS_OS_HCl) of said outer surface of said hollow cylinder (HCl) is within a predefined range.

8. Device (DEV1) according to any of the preceding claims, wherein an inner surface of said hollow cylinder (HCl) comprises a first section (FS_JS_HCl) with a first inner diameter (FS_ID_HCl) and at least one second section (SS_IS_HCl) with a second inner diameter (SS_ID _HCl) smaller than said first inner diameter (FS_ID_HCl), wherein said means (SS_IS_HCl) for catching said end section of said hollow pipe (HP) is said at least one second section (SS_IS_HCl) of said inner surface, and wherein a geometrical form of said at least one second section (SS_IS_HCl) of said inner surface is adapted to fit into at least one wave trough of an annularly corrugated outer surface of said hollow pipe (HP).

9. Device (DEV1) according to any of the preceding claims, wherein said device (DEV1) is a plug connector, wherein said means (MP) for plugging is a coupling nut, and wherein said hollow cylinder is a sleeve.

10. Connection system (CS1) comprising a device (DEV1) according to any of the preceding claims, wherein said connection system (CS1) further comprises said hollow pipe (HP) and said counter piece (DN1), wherein said hollow pipe (HP) is plugged to said counter piece (DN1) by said device (DEV1), wherein said first end-face (EFl_HCl) of said hollow cylinder (HCl) is within a predefined radial distance (MRD) from a centre (LCL) of said hollow pipe (HP), and wherein an end-face (EF_DN1) of said counter piece (DN1) within said predefined radial distance (MRD) is parallel oriented to said first end-face (EFl_HCl) of said hollow cylinder (HCl).

11. Connection system (CS1) according to claim 9, wherein said connection system (CS1) is a screw coupling, wherein said hollow pipe (HP) is a metal pipe, and wherein said counter piece (DN1) is a double nipple.

12. Method (MET) for plugging a hollow pipe (HP) to a counter piece (DN1), said method comprising the steps of:
enclosing (M2) an end section of said hollow pipe (HP) by a hollow cylinder (HCl) of a device (DEV1), and
- catching (M3) said end section of said hollow pipe (HP) by said hollow cylinder (HCl),
**characterized in that** said method (MET) further comprising the step of clamping (M4) an overhanging border area (BA_HP) of said end section of said hollow pipe (HP) according to said hollow cylinder (HCl) between a first end-face (EFl_HCl) of said hollow cylinder (HCl) and an end-face (EF_DN1) of said counter piece (DN1) by plugging said device (DEV1) to said counter piece (DN1).

13. Method (MET) according to claim 12, wherein said method (MET) further comprises the step of generating (M5) a widened flange (WF_HP) from said overhanging border area (BA_HP) of said end section of said hollow pipe (HP) by said plugging of said device (DEV1) to said counter piece (DN1).

14. Method (MET) according to claim 12 or claim 13, wherein said method (MET) further comprises the step of cutting (M1) said hollow pipe (HP) at a wave trough of an annularly corrugated outer surface of said hollow pipe (HP).
